# EUROPEAN PATENT APPLICATION

(11) **EP 4 642 023 A1**
(43) Date of publication of application: **29.10.2025**
(21) Application number: 25172249.2
(22) Date of filing: 24.04.2025
(51) Int. Cl.: H04N 9/31

(54) **PROJECTION METHOD, PROJECTOR, AND NON-TRANSITORY COMPUTER-READABLE STORAGE MEDIUM STORING PROGRAM**

(30) Priority: 26.04.2024 JP 2024072335
(71) Applicant: Seiko Epson Corporation, Tokyo 160-8801 (JP)
(72) Inventor: ICHIEDA, Hiroyuki, 261-8507 Chiba-shi (JP)
(74) Representative: Lewis Silkin LLP

(57) **Abstract**

Determining whether a first projector is communicably coupled to a second projector by a second processor provided in the first projector and projecting a stacking guide image for guiding an operation of at least partially superimposing a first projection image and a second projection image by the first projector when the first projector is communicably coupled to the second projector are executed.

## Description

The present application is based on, and claims priority from JP Application Serial Number 2024-072335, filed April 26, 2024, the disclosure of which is hereby incorporated by reference herein in its entirety.

### BACKGROUND

### 1. Technical Field

The present disclosure relates to a projection method, a projector, and a non-transitory computer-readable storage medium storing a program.

### 2. Related Art

In the related art, techniques of stacking projection and tiling projection for projecting images on projection surfaces by a plurality of projectors are known. In the tiling projection and the stacking projection, it is necessary for a user to perform a plurality of settings by operating operation units or the like, which is troublesome work.

JP-A-2019-133237 discloses an image display device including a top menu item, a middle menu item, and a bottom menu item as operation menus and displays an optimum menu item among these menu items based on an operation received by an operation unit.

JP-A-2019-133237 is an example of the related art.

However, in the technology disclosed in JP-A-2019-133237, it is necessary for a user to perform an operation for displaying a menu item corresponding to tiling projection or stacking projection, and there is room for reducing the burden on the user.

### SUMMARY

A projection method according to an aspect of the present disclosure is a projection method for a projector that projects a projection image at least partially overlapping another projection image projected by another projector, and the projection method includes determining whether the projector is communicably coupled to the other projector by one or more processors provided in the projector, and projecting a guide image for guiding an operation of at least partially superimposing the projection image and the other projection image by the projector when the projector is communicably coupled to the other projector.

A projector according to an aspect of the present disclosure is a projector that projects a projection image at least partially overlapping another projection image projected by another projector, and the projector includes a communication interface that communicates with the other projector, a projection section that projects the projection image, and one or more processors that determine whether the projector is communicably coupled to the other projector, wherein the one or more processors determine whether the projector is communicably coupled to the other projector, and projects a guide image for guiding an operation of at least partially superimposing the projection image and the other projection image by the projection section when the projector is communicably coupled to the other projector.

A non-transitory computer-readable storage medium storing a program according to an aspect of the present disclosure is a non-transitory computer-readable storage medium storing a program to be executed by one or more processors mounted on a projector that projects a projection image at least partially overlapping another projection image projected by another projector, and the program causes the one or more processors to execute determining whether the projector is communicably coupled to the other projector, and projecting a guide image for guiding an operation of at least partially superimposing the projection image and the other projection image by the projector when the projector is communicably coupled to the other projector.

### BRIEF DESCRIPTION OF THE DRAWINGS

FIG. 1 shows a system configuration of a projection system.
FIG. 2 is a block diagram showing a configuration of an information processing device.
FIG. 3 is a block diagram showing a configuration of a first projector.
FIG. 4 shows a selection image.
FIG. 5 shows a stacking guide image displayed on a projection surface.
FIG. 6 shows a tiling guide image displayed on the projection surface.
FIG. 7 shows details of the stacking guide image.
FIG. 8 shows details of the tiling guide image.
FIG. 9 shows a first instruction image.
FIG. 10 shows the first instruction image.
FIG. 11 shows a first projection image and a second projection image corrected using a quick corner.
FIG. 12 shows a second instruction image.
FIG. 13 shows the projection surface after a second adjustment step.
FIG. 14 shows the first instruction image.
FIG. 15 shows the second instruction image.
FIG. 16 shows the second instruction image.
FIG. 17 shows the second instruction image.
FIG. 18 is a flowchart showing an operation of the first projector.
FIG. 19 is a flowchart showing the operation of the first projector.
FIG. 20 shows another example of the first instruction image.

### DESCRIPTION OF EMBODIMENTS

### 1. System Configuration of Projection System

As below, an embodiment of the present disclosure will be described with reference to the accompanying drawings.

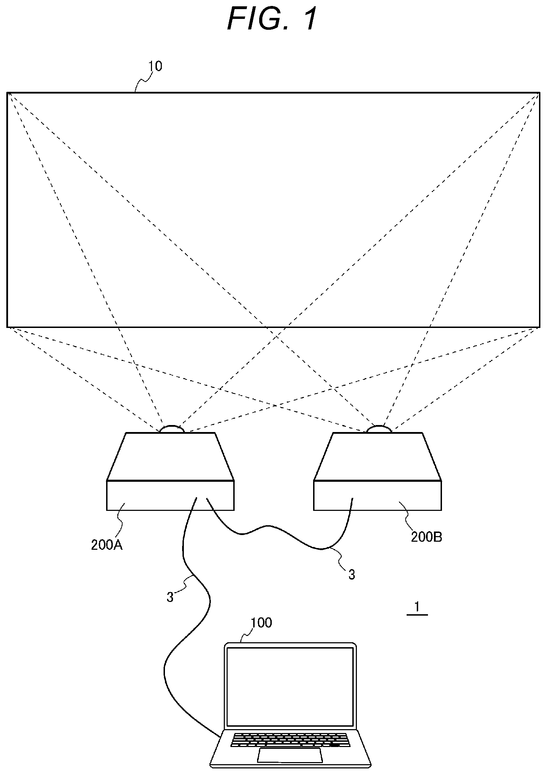

FIG. 1 shows a system configuration of a projection system 1.

The projection system 1 includes an information processing device 100 and a projector 200. The information processing device 100 operates as an image supply device that supplies image data to the projector 200. The projector 200 is a projection device that generates an image light based on the image data supplied from the information processing device 100 and projects the generated image light onto a projection surface 10.

FIG. 1 shows a case where the projection system 1 includes two projectors 200 of a first projector 200A and a second projector 200B, however, the number of projectors 200 provided in the projection system 1 is not limited to two, but may be three or more. The first projector 200A corresponds to a projector, and the second projector 200B corresponds to another projector.

The information processing device 100 and the first projector 200A are coupled by a data communication line 3, and the first projector 200A and the second projector 200B are also coupled by the data communication line 3. For the data communication line 3, a USB (Universal Serial Bus) cable, a LAN (Local Area Network) cable, a HDMI (High-Definition Multimedia Interface) cable, or the like is used. USB and HDMI are registered trademarks.

The projection system 1 of the embodiment is a system that realizes stacking projection or tiling projection by the first projector 200A and the second projector 200B.

The stacking projection is a projection method of superimposing a first projection image 20 as an image projected by the first projector 200A and a second projection image 30 as an image projected by the second projector 200B to project. The tiling projection is a projection method of partially superimposing and arranging the first projection image 20 and the second projection image 30 vertically or laterally in line to display one large-sized image. The first projection image 20 corresponds to a projection image, and the second projection image 30 corresponds to another projection image.

### 2. Configuration of Information Processing Device

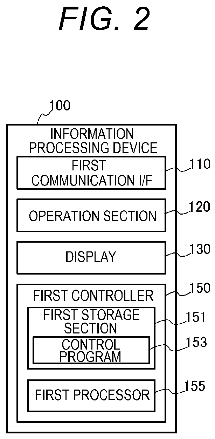

FIG. 2 is a block diagram showing a configuration of the information processing device 100.

The information processing device 100 includes a first communication interface 110, an operation unit 120, a display 130, and a first controller 150. Hereinafter, the interface is abbreviated as an I/F.

The first communication I/F 110 includes a connector to which the data communication line 3 is coupled, and an interface circuit that transmits and receives data such as image data and control data via the data communication line 3.

The operation unit 120 includes operation devices such as a keyboard and a mouse, and receives an operation of a user.

The display 130 includes a display panel such as a liquid crystal panel or an organic EL (Electro-Luminescence) panel, and displays an image on the display panel under control of the first controller 150.

The first controller 150 is a computer device including a first storage section 151 and a first processor 155.

The first storage section 151 includes a volatile memory such as a RAM (Random Access Memory) and a nonvolatile memory such as a ROM (Read Only Memory). The first storage section 151 may include an auxiliary storage device such as an SSD (Solid State Drive) or an HDD (Hard Disk Drive).

The first storage section 151 stores control programs 153 such as an OS (Operating System) and an application program executed by the first processor 155.

The first processor 155 is an arithmetic processing device implemented by a CPU (Central Processing Unit) or an MPU (Micro Processing Unit). The first processor 155 can be implemented by a single processor or a plurality of processors.

### 3. Configuration of Projector

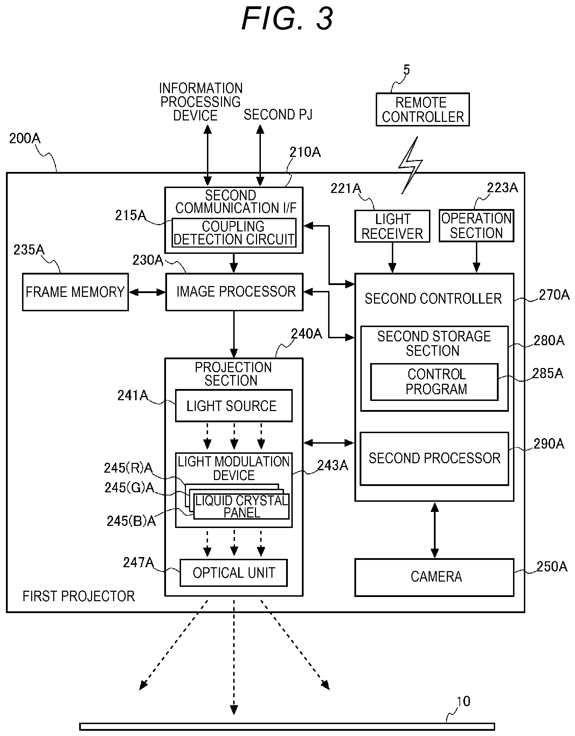

FIG. 3 is a block diagram showing a configuration of the first projector 200A.

The first projector 200A and the second projector 200B have substantially the same configuration. Accordingly, hereinafter, the configuration of the first projector 200A will be described and the description of the configuration of the second projector 200B will be omitted.

The first projector 200A includes a second communication I/F 210A, a light receiver 221A, an operation section 223A, an image processor 230A, a frame memory 235A, a projection section 240A, a camera 250A, and a second controller 270A.

The second communication I/F 210A includes a connector to which the data communication line 3 is coupled, and an interface circuit that transmits and receives data such as image data and control data via the data communication line 3. The data communication line 3 coupled to the information processing device 100 and the data communication line 3 coupled to the second projector 200B are coupled to the second communication I/F 210A.

The second communication I/F 210A includes a coupling detection circuit 215A.

The coupling detection circuit 215A detects the coupling of the data communication line 3 to the connector. For example, the coupling detection circuit 215A detects coupling of a LAN cable to a LAN (Local Area Network) connector. The coupling detection circuit 215A detects the coupling of the LAN cable when the LAN cable is coupled to the LAN connector of the first projector 200A and the LAN cable is coupled to the LAN connector of the second projector 200B.

The coupling detection circuit 215A detects coupling of a USB cable to a USB connector. When the USB cable is coupled to the USB connector of the first projector 200A and the USB cable is coupled to the USB connector of the second projector 200B, a voltage of a predetermined signal line among a plurality of signal lines provided in the USB cable changes. The coupling detection circuit 215A detects the change in the voltage of the predetermined signal line and detects the coupling of the USB cable to the USB connector. The coupling detection circuit 215A may detect whether the LAN cable or the USB cable is enabled to transmit a signal by, for example, a TDR (Time Domain Reflectometry) method.

When the coupling detection circuit 215A detects the coupling of the data communication line 3, the second communication I/F 210A outputs a detection signal to the second controller 270A.

The light receiver 221A receives an infrared signal transmitted by a remote controller 5. The light receiver 221A outputs an operation signal corresponding to the received infrared signal to the second controller 270A. The operation signal is a signal corresponding to an operated switch of the remote controller 5. The remote controller 5 is provided with, for example, a cross key and an enter button. The infrared signal corresponds to an example of an operation signal. The remote controller 5 corresponds to an example of an operation device.

The operation section 223A is a reception unit that receives an operation of the user. The operation section 223A is provided in the main body of the first projector 200A. The operation section 223A is provided with, for example, a power button, a cross key, and an enter button.

The frame memory 235A is coupled to the image processor 230A. The frame memory 235A includes a plurality of banks. Each of the banks has a storage capacity in which image data for one frame can be written. The frame memory 235A is implemented by, for example, an SDRAM (Synchronous Dynamic RAM). The image processor 230A loads the image data input from the second communication I/F 210A in the frame memory 235A.

The image processor 230A performs image processing on the image data loaded in the frame memory 235A. Examples of the image processing performed by the image processor 230A include resolution conversion processing, resizing processing, distortion aberration correction, shape correction processing, digital zoom processing, and adjustment of color tone and brightness of an image. The image processor 230A executes processing designated by the second controller 270A, and executes the processing by using a parameter input from the second controller 270A as necessary. Obviously, the image processor 230A can execute a combination of the plurality of pieces of the above described image processing. When the image processing ends, the image processor 230A reads the image data loaded in the frame memory 235A and outputs the read image data to a panel driver of a light modulation device 243A. Illustration of the panel driver is omitted.

The image processor 230A and the frame memory 235A are implemented by, for example, an integrated circuit. Examples of the integrated circuit include an LSI (Large Scale Integration), an ASIC (Application Specific Integrated Circuit), a PLD (Programmable Logic Device), an FPGA (Field-Programmable Gate Array), and an SoC (System-on-a-chip). The configuration of the integrated circuit may partially include an analog circuit, and the second controller 270A and the integrated circuit may be combined.

The projection section 240A includes a light source 241A, the light modulation device 243A, and an optical unit 247A.

The light source 241A includes a discharge type light source lamp such as an ultrahigh-pressure mercury lamp or a metal halide lamp, or a solid light source such as a light emitting diode or a semiconductor laser. A light emitted from the light source 241A is separated into a red light, a green light, and a blue light by a color separation system (not shown).

The light modulation device 243A includes three liquid crystal panels 245(R)A, 245(G)A, and 245(B)A corresponding to the color components of red, green, and blue. Hereinafter, the liquid crystal panels 245(R)A, 245(G)A, and 245(B)A are collectively referred to as a liquid crystal panel 245A in some cases. The color lights separated into the color components of red, green, and blue by the color separation system enter the liquid crystal panels 245(R)A, 245(G)A, and 245(B)A, respectively.

Each of the liquid crystal panels 245(R)A, 245(G)A, 245(B)A includes a transmissive liquid crystal panel with liquid crystal enclosed between a pair of transparent substrates. In the liquid crystal panel 245A, a pixel area including a plurality of pixels arranged in a matrix form is formed and a drive voltage can be applied to the liquid crystal for each pixel.

The light modulation device 243A includes the panel driver that drives the liquid crystal panels 245(R)A, 245(G)A, and 245(B)A. The panel driver applies a drive voltage corresponding to the image data input from the image processor 230A to each pixel in the pixel area and sets each pixel at light transmittance according to the image data. The light emitted from the light source 241A passes through the pixel area of the liquid crystal panel 245A and is modulated with respect to each pixel, and an image light corresponding to the image data is formed with respect to each color light. The formed image lights of the respective colors are combined with respect to each pixel by a color combining system (not shown) into an image light representing a color image. The optical unit 247A includes a projection lens and enlarges and projects the image light modulated by the liquid crystal panel 245A onto the projection surface 10. Thereby, a projection image based on the image data is displayed on the projection surface 10.

The camera 250A includes a capturing element (not shown) such as a CCD (Charge Coupled Device) sensor or a CMOS (Complementary Metal Oxide Semiconductor) sensor. The camera 250A repeatedly captures images of the projection surface 10 under control of the second controller 270A, and sequentially outputs captured images as capturing results to the second controller 270A.

The second controller 270A is a computer device including a second storage section 280A and a second processor 290A.

The second storage section 280A includes a volatile memory such as a RAM and a nonvolatile memory such as a ROM. The RAM is used to temporarily store data processed by the second processor 290A, and the ROM stores a control program 285A for controlling the operation of the first projector 200A and various setting data.

The second processor 290A is an arithmetic processing device implemented by a CPU, an MPU, or the like. The second processor 290A executes the control program 285A to control each section of the first projector 200A. The second processor 290A can be implemented by a single processor or a plurality of processors. The second processor 290A may include an SoC integrated with a part or all of the second storage section 280A or with other circuits. The second processor 290A may include a combination of a CPU that executes a program and a DSP that executes predetermined arithmetic processing. The second processor 290A may have a configuration by implementation of all functions in hardware, or may be formed using a programmable device. The second processor 290A corresponds to an example of one or more processors.

### 4. Operation of First Projector and Second Projector

As below, the operation when the stacking projection or the tiling projection are executed using the first projector 200A and the second projector 200B will be described.

First, the user installs the first projector 200A and the second projector 200B. The first projector 200A and the second projector 200B are installed so that the entire first projection image 20 projected by the first projector 200A and the entire second projection image 30 projected by the second projector 200B are displayed within the projection surface 10.

Then, the user performs network settings of the first projector 200A and the second projector 200B. The user operates the operation sections 223A and 223B of the first projector 200A and the second projector 200B or the remote controller 5 to display an OSD (On-Screen Display) screen on the projection surface 10, and sets IP (Internet Protocol) addresses of the first projector 200A and the second projector 200B.

Then, the user couples the first projector 200A and the second projector 200B via the data communication line 3. The user couples the data communication line 3 to the connector of the second communication I/F 210A and the connector of the second communication I/F 210B.

The first projector 200A and the second projector 200B are coupled by the data communication line 3, and thereby, the coupling detection circuit 215A of the second communication I/F 210A detects the coupling of the data communication line 3 to the connector, and the second communication I/F 210A outputs the detection signal to the second controller 270A.

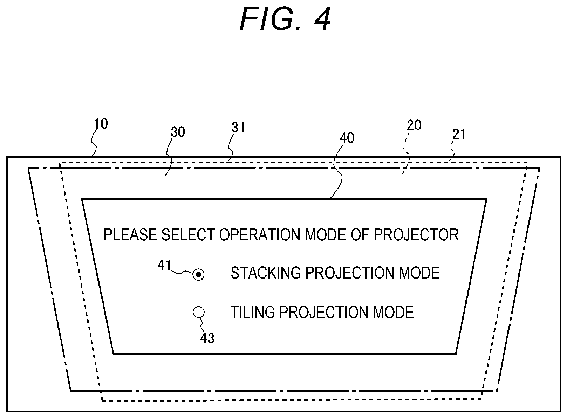

FIG. 4 shows an example of a selection image 40. The selection image 40 corresponds to an example of a guide image and a first guide image.

When the detection signal is input from the second communication I/F 210A, the second controller 270A displays the selection image 40 for receiving a selection of an operation mode on the projection surface 10. In the embodiment, a case where the first projector 200A displays the selection image 40, a stacking guide image 50 and a tiling guide image 60, which will be described later, on the projection surface 10 is described, however, the second projector 200B may display the selection image 40, the stacking guide image 50, and the tiling guide image 60 on the projection surface 10.

In the selection image 40, a text of "stacking projection mode", a radio button 41 displayed in association with the text, a text of "tiling projection mode", and a radio button 43 displayed in association with the text are displayed. The radio button 41 corresponds to an example of a first option image, and the radio button 43 corresponds to an example of a second option image. The design of the selection image 40 may be changed in any manner as long as the user can select either the stacking projection mode or the tiling projection mode from the selection image 40.

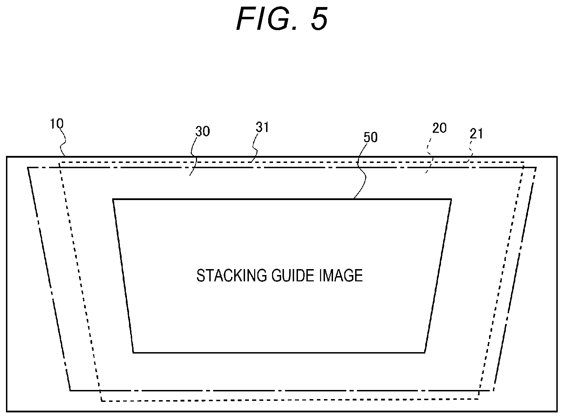

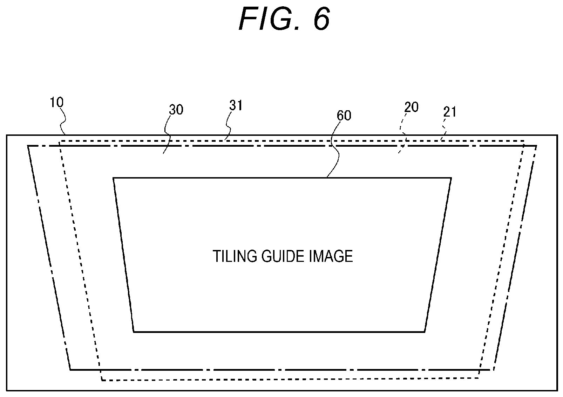

For example, the user operates the cross key of the remote controller 5 to select one of the radio buttons 41 and 43. When the stacking projection mode is selected, the radio button 41 is selected, and when the tiling projection mode is selected, the radio button 43 is selected. The user selects one of the radio buttons 41 and 43, and then, presses the enter button provided on the remote controller 5. When the enter button is pressed, the second controller 270A displays the stacking guide image 50 or the tiling guide image 60 on the projection surface 10. The second controller 270A displays the stacking guide image 50 shown in FIG. 5 on the projection surface 10 when the radio button 41 is selected, and displays the tiling guide image 60 shown in FIG. 6 on the projection surface 10 when the radio button 43 is selected. The stacking guide image 50 corresponds to an example of a guide image and a second guide image. The tiling guide image 60 corresponds to an example of a guide image and a third guide image.

The first projection image 20 projected by the first projector 200A is shown by a broken line in FIG. 4. Further, the second projection image 30 projected by the second projector 200B is shown by a one-dot chain line in FIG. 4. The first projection image 20 shown in FIG. 4 is an image including the selection image 40 and indicating a figure 21 showing an edge of the first projection image 20. The second projection image 30 shown in FIG. 4 is an image indicating a figure 31 showing an edge of the second projection image 30.

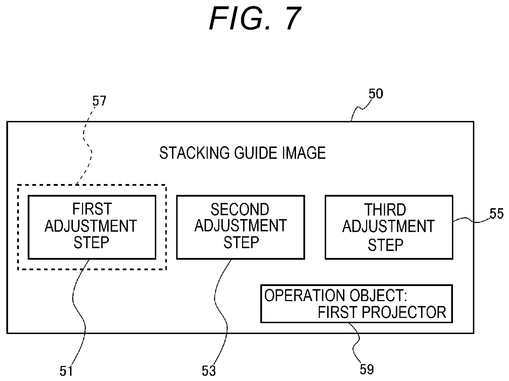

FIG. 7 shows details of the stacking guide image 50.

First, the operation when the radio button 41 is selected in the selection image 40 and the stacking projection mode is selected as the operation mode is described. The stacking projection mode is an operation mode in which projection images projected by the plurality of projectors 200 are superimposed to project one image. In the stacking guide image 50, a plurality of adjustment steps for realizing the stacking projection by the plurality of projectors 200 are displayed in the order of execution of the plurality of adjustment steps. In the stacking guide image 50 shown in FIG. 7, a first adjustment step 51, a second adjustment step 53, and a third adjustment step 55 are sequentially displayed from the left in the view of the drawing. All of the first adjustment step 51, the second adjustment step 53, and the third adjustment step 55 are button images selectable by the user.

In the stacking guide image 50, an operation frame 57 indicated by a broken line and a device display image 59 indicating the projector 200 operable by the remote controller 5 are displayed. The device display image 59 corresponds to an example of an identification image. When the device display image 59 displays the first projector 200A, the first projector 200A can be operated by the remote controller 5, and when the device display image 59 displays the second projector 200B, the second projector 200B can be operated by the remote controller 5.

The infrared signal transmitted by the remote controller 5 is received by the first projector 200A and processed by the second controller 270A. When the display of the device display image 59 is the first projector 200A, the second controller 270A processes the operation signal input from the light receiver 221A without change. Further, when the display of the device display image 59 is the second projector 200B, the second controller 270A transmits the operation signal input from the light receiver 221A to the second projector 200B.

The operation frame 57 is a frame-shaped image in which any one of the first adjustment step 51, the second adjustment step 53, and the third adjustment step 55 displayed in the stacking guide image 50 are selectable. The user operates the cross key of the remote controller 5 to select the first adjustment step 51 by the operation frame 57, and presses the enter button provided on the remote controller 5. When receiving the pressing operation of the enter button, the second controller 270A displays a first instruction image 511 on the projection surface 10.

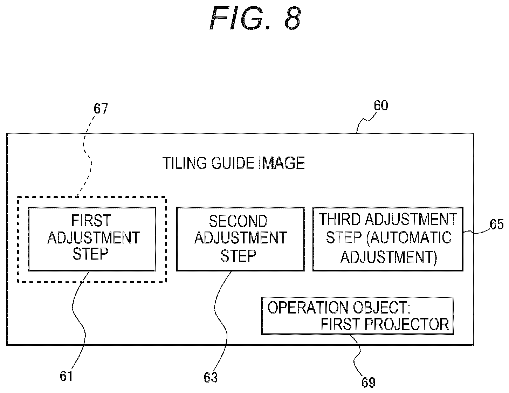

FIG. 8 shows details of the tiling guide image 60.

In the tiling guide image 60, a plurality of adjustment steps for realizing tiling projection by the plurality of projectors 200 are displayed in the order of execution of the plurality of adjustment steps. In the tiling guide image 60 shown in FIG. 8, a first adjustment step 61, a second adjustment step 63, and a third adjustment step 65 are sequentially displayed from the left in the view of the drawing. All of the first adjustment step 61, the second adjustment step 63, and the third adjustment step 65 are button images selectable by the user. Further, an operation frame 67 and a device display image 69 are displayed in the tiling guide image 60. The device display image 69 corresponds to an example of an identification image.

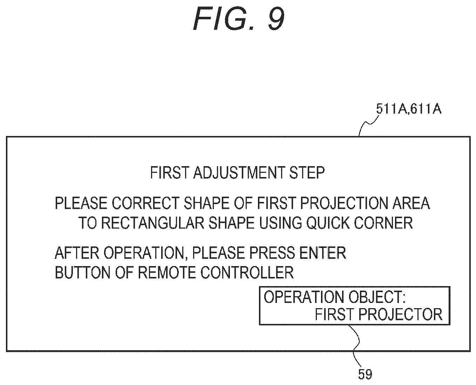

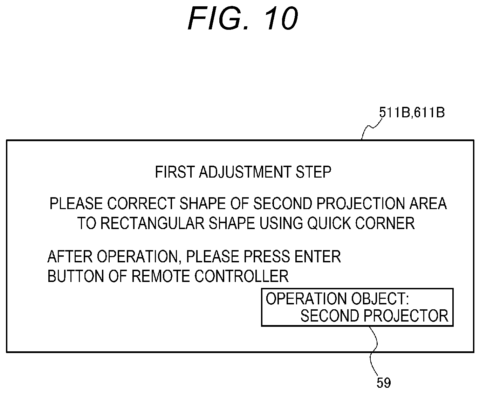

FIG. 9 shows a first instruction image 511A, and FIG. 10 shows a first instruction image 511B. Hereinafter, the first instruction image 511A and the first instruction image 511B are collectively referred to as the first instruction image 511 in some cases.

The first instruction image 511A and the first instruction image 511B are images showing details of the first adjustment step 51. The first instruction image 511B is displayed by the user pressing the enter button of the remote controller 5 after execution of the details of the adjustment indicated by the first instruction image 511A.

In the first instruction image 511A, texts representing an adjustment method for adjusting at least one of the position and the shape of the first projection image 20 projected by the first projector 200A are displayed. In the first instruction image 511B, texts representing an adjustment method for adjusting at least one of the position and the shape of the second projection image 30 projected by the second projector 200B are displayed.

The device display image 59 is also displayed in the first instruction image 511A and the first instruction image 511B. The first instruction image 511A indicates that the first projector 200A is a device as an operation object by the remote controller 5, and the first instruction image 511B indicates that the second projector 200B is a device as an operation object by the remote controller 5. In the first instruction image 511A shown in FIG. 9, the device display image 59 indicating that the operation object by the remote controller 5 is the first projector 200A is displayed. Further, in the first instruction image 511B shown in FIG. 10, the device display image 59 indicating that the operation object by the remote controller 5 is the second projector 200B is displayed.

The user corrects the shape of the first projection image 20 projected by the first projector 200A to a rectangular shape using a quick corner according to the adjustment method displayed in the first instruction image 511A. After correcting the shape of the first projection image 20, the user presses the enter button of the remote controller 5 to display the first instruction image 511B. Then, the user corrects the shape of the second projection image 30 projected by the second projector 200B to a rectangular shape using a quick corner according to the adjustment method displayed in the first instruction image 511B.

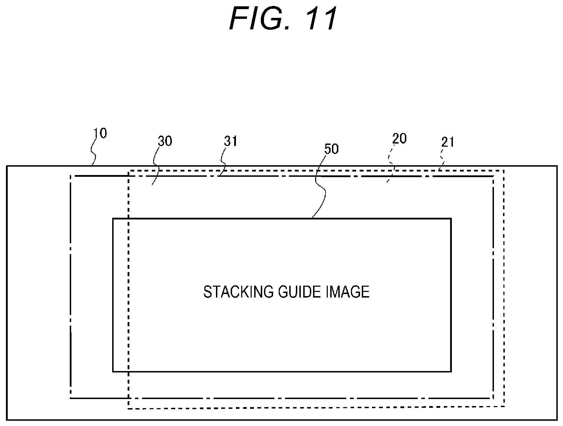

FIG. 11 shows the first projection image 20 and the second projection image 30 before correction by the quick corner. The quick corner refers to an operation of selecting a corner to be corrected among the four corners of the first projection image 20 or the second projection image 30 by operating the remote controller 5 and moving the selected corner by operating the cross key of the remote controller 5. The second controller 270A moves the corner of the first projection image 20 drawn on the liquid crystal panel 245A in the direction corresponding to the pressed cross key. The second controller 270A continues this processing while the cross key is pressed.

Then, the user returns to the stacking guide image 50 shown in FIG. 7, operates the cross key of the remote controller 5 to select the second adjustment step 53 by the operation frame 57, and presses the enter button provided on the remote controller 5. When receiving the pressing operation of the enter button, the second controller 270A displays a second instruction image 531 on the projection surface 10.

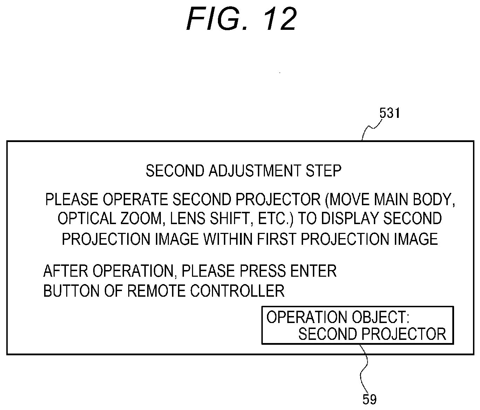

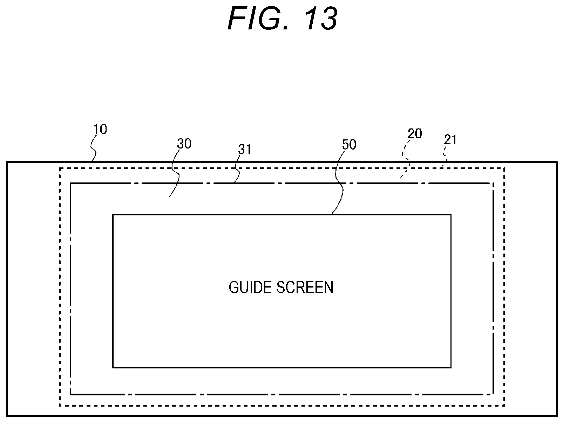

FIG. 12 shows the second instruction image 531. FIG. 13 shows the projection surface 10 after the end of the second adjustment step 53.

The second instruction image 531 is an image showing details of the second adjustment step 53. The second instruction image 531 also displays texts indicating an adjustment method for adjusting at least one of the position and the shape of the second projection image 30 projected by the second projector 200B. The device display image 59 is also displayed in the second instruction image 531. The device display image 59 displayed in the second instruction image 531 indicates that the projector 200 as the operation object by the remote controller 5 is the second projector 200B.

In the second instruction image 531, for example, texts for instructing to operate the second projector 200B so that the second projection image 30 is displayed in the first projection image 20 are displayed as the details of the adjustment. The user moves the main bodies of the first projector 200A and the second projector 200B, operates the remote controller 5 to perform optical zoom and lens shift on the second projector 200B according to the second instruction image 531 for adjustment such that the second projection image 30 is displayed in the first projection image 20. Thereby, as shown in FIG. 13, the adjustment is made such that the second projection image 30 is displayed in the first projection image 20.

Then, the user returns to the stacking guide image 50 shown in FIG. 7, operates the cross key of the remote controller 5 to select the third adjustment step 55 by the operation frame 57, and presses the enter button provided on the remote controller 5. When receiving the pressing operation of the enter button, the second controller 270A executes the third adjustment step 55.

The third adjustment step 55 is a step automatically executed by the first projector 200A or the second projector 200B. For example, the second projector 200B captures an image of the projection surface 10 with a camera 250B, changes the display position and the size of the second projection image based on the captured image, and superimposes the second projection image 30 on the first projection image 20.

Next, an operation when the radio button 43 is selected in the selection image 40 and the tiling projection mode is selected as the operation mode will be described. The tiling projection mode is an operation mode in which ends of projection images projected by the plurality of projectors 200 are disposed so as to overlap each other, and a large continuous image is displayed from the plurality of projection images.

In a state in which the tiling guide image 60 shown in FIG. 8 is displayed on the projection surface 10, the user operates the cross key of the remote controller 5 to select the first adjustment step 61 by the operation frame 67, and presses the enter button provided on the remote controller 5. When receiving the pressing operation of the enter button, the second controller 270A displays a first instruction image 611 on the projection surface 10.

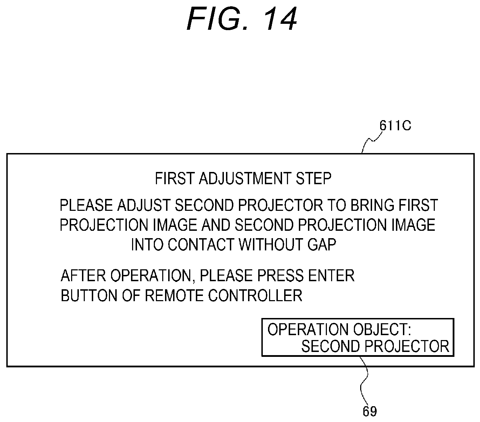

The first instruction image 611 includes a first instruction image 611A, a first instruction image 611B, and a first instruction image 611C shown in FIG. 14. The first instruction image 611A is the same as the first instruction image 511A shown in FIG. 9, and the first instruction image 611B is the same as the first instruction image 511B shown in FIG. 10. Accordingly, the description of the first instruction image 611A and the first instruction image 611B is omitted. The first instruction image 611 corresponds to an example of a third instruction image.

FIG. 14 shows the first instruction image 611C.

For example, in the first instruction image 611C, for example, texts that "PLEASE ADJUST FIRST PROJECTOR 200A AND SECOND PROJECTOR 200B TO BRING FIRST PROJECTION IMAGE 20 AND SECOND PROJECTION IMAGE 30 INTO CONTACT WITHOUT GAP" are displayed. The user moves the main bodies of the first projector 200A and the second projector 200B, or operates the remote controller 5 to perform lens shift on the first projector 200A and the second projector 200B according to the first instruction image 611C, thereby adjusting the first projection image 20 and the second projection image 30 to be in contact. Subsequently, the user presses the enter button of the remote controller 5. The device display image 69 is also displayed in the first instruction image 611C. The device display image 69 indicating that the operation object by the remote controller 5 is the second projector 200B is displayed in the first instruction image 611C shown in FIG. 14.

Then, the user returns to the tiling guide image 60 shown in FIG. 8, operates the cross key of the remote controller 5 to select the second adjustment step 63 by the operation frame 67, and presses the enter button provided on the remote controller 5. When receiving the pressing operation of the enter button, the second controller 270A displays a second instruction image 631 on the projection surface 10.

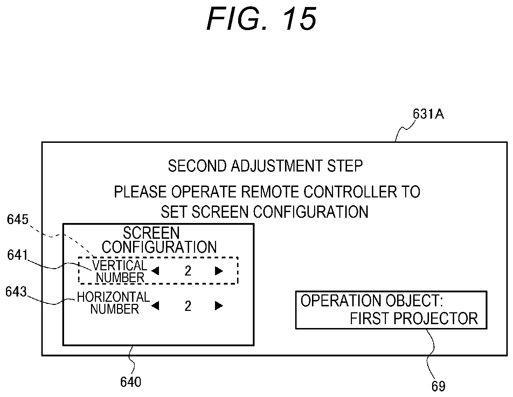

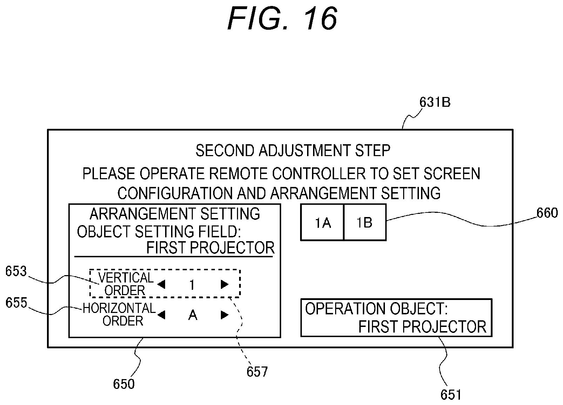

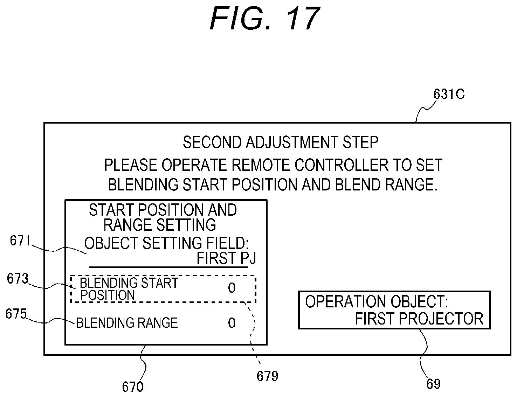

FIG. 15 shows a second instruction image 631A, FIG. 16 shows a second instruction image 631B, and FIG. 17 shows a second instruction image 631C. The second instruction images 631A, 631B, and 631C correspond to an example of a fourth instruction image.

The second instruction image 631A, the second instruction image 631B, and the second instruction image 631C are images showing details of the second adjustment step 63. The second instruction image 631B is displayed when the user presses the enter button of the remote controller 5 after execution of the details of the adjustment shown in the second instruction image 631A. The second instruction image 631C is displayed when the user presses the enter button of the remote controller 5 after execution of the details of the adjustment shown in the second instruction image 631B.

The device display image 69 is also displayed in the second instruction image 631A, the second instruction image 631B, and the second instruction image 631C. The device display image 69 displayed in the second instruction image 631A, the second instruction image 631B, and the second instruction image 631C indicates that the projector 200 as the operation object by the remote controller 5 is the first projector 200A.

A first setting image 640 for receiving settings of a screen configuration is displayed in the second instruction image 631A. The screen configuration refers to a configuration of a screen including a plurality of projection images. The screen configuration includes, for example, one row and two columns in which two projection images are arranged side by side in the horizontal direction of the projection images, and four rows and four columns in which four projection images are arranged in a matrix form. The first setting image 640 includes a vertical number setting field 641 for setting the number of projection images arranged in the vertical direction of the tiling projection, and a horizontal number setting field 643 for setting the number of projection images arranged in the horizontal direction of the tiling projection.

The first setting image 640 displays an operation frame 645 indicating whether the operation object by the remote controller 5 is the vertical number setting field 641 or the horizontal number setting field 643. The user operates the cross key of the remote controller 5 to move the operation frame 645 to the vertical number setting field 641 or the horizontal number setting field 643. Subsequently, the user sets the number in the vertical number setting field 641 or the horizontal number setting field 643 selected by the operation frame 645 using the remote controller 5. When the setting of the vertical number setting field 641 and the horizontal number setting field 643 is finished, the user presses the enter button provided on the remote controller 5.

When receiving the operation of the enter button, the second controller 270A displays the second instruction image 631B shown in FIG. 16 on the projection surface 10.

The second instruction image 631B displays a second setting image 650 for receiving an arrangement setting and a screen configuration image 660. The screen configuration image 660 is an image corresponding to the screen configuration selected in the second instruction image 631A. FIG. 16 shows the screen configuration image 660 of one row and two columns.

Further, the screen configuration image 660 displays identification characters for identifying each divisional area of the screen configuration image 660. For example, when the screen configuration is two in the vertical direction and two in the horizontal direction, the character "1" is displayed in the first row, and the character "2" is displayed in the second row. Further, the character "A" is displayed in the first column, and the character "B" is displayed in the second column.

The second setting image 650 displays an object setting field 651 for selecting the projector 200 as a setting object, a vertical order setting field 653, a horizontal order setting field 655, and an operation frame 657.

The vertical order setting field 653 sets the arrangement of the projection images projected by the projector 200 selected in the object setting field 651. For example, when the first projection image 20 projected by the first projector 200A is projected on the left toward the projection surface 10, "1" is set in the vertical order setting field 653, and "A" is set in the horizontal order setting field 655. When the second projection image 30 projected by the second projector 200B is projected on the right toward the projection surface 10, "1" is set in the vertical order setting field 653, and "B" is set in the horizontal order setting field 655. When the settings of the vertical order setting field 653 and the horizontal order setting field 655 are finished, the user presses the enter button provided on the remote controller 5.

When receiving the operation of the enter button, the second controller 270A displays the second instruction image 631C shown in FIG. 17 on the projection surface 10.

A third setting screen 670 is displayed in the second instruction image 631C. The third setting screen 670 includes an object setting field 671 for selecting the projector 200 as the setting object, a blending start position setting 673, a blending range setting 675, and an operation frame 679.

The blending start position setting 673 is a setting field for setting a start position for starting blending processing. For example, it is assumed that the first projection image 20 is displayed on the left side toward the projection surface 10 and the second projection image 30 is displayed on the right side toward the projection surface 10. In the blending start position setting 673, the start position for starting the blending processing is designated according to a distance from the right end of the first projection image 20 projected on the projection surface 10. Similarly, the start position for starting the blending processing is designated according to a distance from the left end of the second projection image 30 projected on the projection surface 10.

The blending range setting 675 is a setting field for setting a range of edge blending.

Similarly, it is assumed that the first projection image 20 is displayed on the left side toward the projection surface 10 and the second projection image 30 is displayed on the right side toward the projection surface 10. In the blending range setting 675, a range in which the blending processing is executed is set according to the distance from the right end of the first projection image 20 projected on the projection surface 10. Similarly, the range in which the blending processing is executed is set according to the distance from the left end of the second projection image 30 projected on the projection surface 10.

When the settings of the blending start position setting 673 and the blending range setting 675 are finished, the user presses the enter button provided on the remote controller 5.

Then, the user returns to the tiling guide image 60 shown in FIG. 8, moves the operation frame 67 to the third adjustment step 65 by operating the remote controller 5, and presses the enter button provided on the remote controller 5. When receiving the pressing operation of the enter button, the second controller 270A executes the third adjustment step 65.

The third adjustment step 65 is a step automatically executed by the first projector 200A or the second projector 200B. For example, the second controller 270A of the first projector 200A may instruct the second projector 200B to execute tiling, and the second projector 200B may execute tiling processing and the blending processing. In this case, a second controller 270B of the second projector 200B captures an image of the projection surface 10 with the camera 250B, changes the display position and the size of the second projection image 30 based on the captured image, and controls the size and the display position of the second projection image 30 so that the first projection image 20 and the second projection image 30 partially overlap at ends. The blending processing is processing of making the joint between the first projection image 20 and the second projection image 30 less noticeable. In the blending processing, dimming processing is performed on a superimposition area where the plurality of images are partially superimposed on the projection surface 10, thereby making the difference in illuminance between the superimposition area and the non-superimposition area less noticeable.

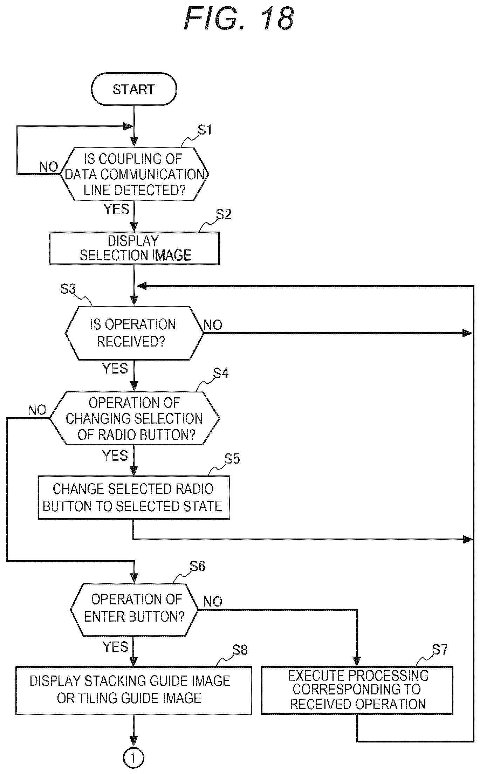

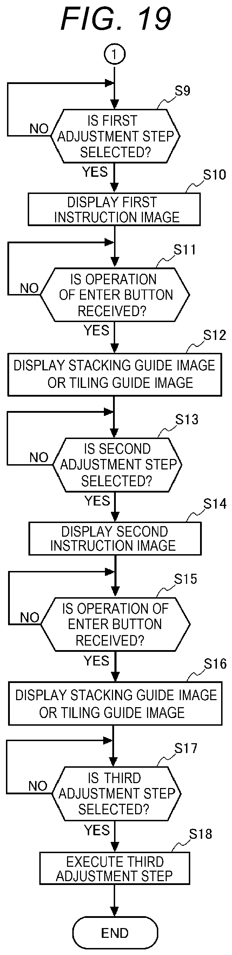

FIGS. 18 and 19 are flowcharts showing an operation of the second controller 270A.

The operation of the second controller 270A will be described with reference to the flowcharts shown in FIGS. 18 and 19.

First, the user places the first projector 200A and the second projector 200B at positions where the first projection image 20 and the second projection image 30 can be projected on the projection surface 10.

Then, the user respectively operates the operation section 223A of the first projector 200A and an operation section 223B of the second projector 200B to display an OSD image on the projection surface 10, and respectively sets the IP addresses of the first projector 200A and the second projector 200B.

Then, the user couples the first projector 200A and the second projector 200B via the data communication line 3.

The second controller 270A determines whether the data communication line 3 is coupled to the second communication I/F 210A (step S1). The second controller 270A determines whether the detection signal is input from the second communication I/F 210A, and determines whether the data communication line 3 is coupled to the second communication I/F 210A. When the coupling detection circuit 215A detects the coupling of the data communication line 3 to the connector, the second communication I/F 210A outputs the detection signal to the second controller 270A.

When the detection signal is not input from the second communication I/F 210A, the second controller 270A determines that the data communication line 3 is not coupled to the second communication I/F 210A (step S1/NO). In this case, the second controller 270A waits until the data communication line 3 is coupled to the second communication I/F 210A.

When the detection signal is input from the second communication I/F 210A and a determination that the data communication line 3 is coupled to the second communication I/F 210A is made (step S1/YES), the second controller 270A displays the selection image 40 on the projection surface 10 (step S2).

Then, the second controller 270A determines whether an operation of the remote controller 5 is received (step S3). When the operation of the remote controller 5 is not received (step S3/NO), the second controller 270A waits until the operation of the remote controller 5 is received.

When receiving the operation of the remote controller 5 (step S3/YES), the second controller 270A determines whether the received operation is an operation of changing the selection of the radio button 41 or 43 (step S4). When the received operation is an operation of changing the selection of the radio button 41 or 43 (step S4/YES), the second controller 270A changes the radio button 41 or 43 selected by the operation to a selected state (step S5).

When the received operation is not the operation of changing the selection of the radio button 41 or 43 (step S4/NO), the second controller 270A determines whether the received operation is an operation of the enter button provided on the remote controller 5(step S6). When the received operation is not the operation of the enter button (step S6/NO), the second controller 270A executes processing corresponding to the received operation (step S7), and returns to the determination in step S3.

When the received operation is the operation of the enter button (step S6/YES), the second controller 270A displays the stacking guide image 50 or the tiling guide image 60 corresponding to the selected radio button 41 or 43 on the projection surface 10 (step S8).

The operation of the second controller 270A will be continuously described with reference to the flowchart shown in FIG. 9.

Then, the second controller 270A determines whether the first adjustment step 51 or 61 is selected (step S9). When the first adjustment step 51 or 61 is not selected (step S9/NO), the second controller 270A waits until the first adjustment step 51 or 61 is selected.

When the first adjustment step 51 or 61 is selected (step S9/YES), the second controller 270A displays the first instruction image 511 or 611 indicating the details of the first adjustment step 51 or 61 on the projection surface 10 (step S10). Here, the first instruction images 511A and 511B are collectively referred to as the first instruction image 511, and the first instruction images 611A, 611B, and 611C are collectively referred to as the first instruction image 611.

Then, the second controller 270A determines whether an operation of the enter button is received (step S11). When the operation of the enter button is not received (step S11/NO), the second controller 270A waits until the operation of the enter button is received.

When the operation of the enter button is received (step S11/YES), the second controller 270A displays the stacking guide image 50 or the tiling guide image 60 on the projection surface 10 again (step S12). Subsequently, the second controller 270A determines whether the second adjustment step 53 or 63 is selected (step S13). When the second adjustment step 53 or 63 is not selected (step S13/NO), the second controller 270A waits until the second adjustment step 53 or 63 is selected.

When the second adjustment step 53 or 63 is selected (step S13/YES), the second controller 270A displays the second instruction image 531 or 631 indicating the details of the second adjustment step 53 or 63 (step S14). Here, the second instruction images 631A, 631B, and 631C are collectively referred to as the second instruction image 631.

Then, the second controller 270A determines whether an operation of the enter button is received (step S15). When the operation of the enter button is not received (step S15/NO), the second controller 270A waits until the operation of the enter button is received.

When the operation of the enter button is received (step S15/YES), the second controller 270A displays the stacking guide image 50 or the tiling guide image 60 on the projection surface 10 (step S16). Subsequently, the second controller 270A determines whether the third adjustment step 55 or 65 is selected (step S17). When the third adjustment step 55 or 65 is not selected (step S17/NO), the second controller 270A waits until the third adjustment step 55 or 65 is selected.

When the third adjustment step 55 or 65 is selected, the second controller 270A automatically executes the third adjustment step (step S18) and ends theflow. For example, when the stacking projection mode is selected, for example, the second projector 200B captures an image of the projection surface 10 with the camera 250B, changes the display position and the size of the second projection image 30 based on the captured image, and superimposes the second projection image 30 on the first projection image 20. When the tiling projection mode is selected, the first projector 200A or the second projector 200B executes the tiling processing and the blending processing.

### 5. Modification Example 1

In the above described embodiment, the first projector 200A and the second projector 200B are coupled by the data communication line 3 after the IP addresses of the first projector 200A and the second projector 200B are set in advance.

In the modification example, the first projector 200A and the second projector 200B are coupled by the data communication line 3 without IP addresses set for the first projector 200A and the second projector 200B.

When the coupling between the first projector 200A and the second projector 200B is detected by the detection signal from the second communication I/F 210A, the second controller 270A projects the selection image 40 on the projection surface 10 and receives the selection of the stacking projection mode or the tiling projection mode.

For example, it is assumed that the selection of the stacking projection mode is received in the selection image 40. In Modification Example 1, the second controller 270A displays a setting field for receiving the settings of the IP addresses of the first projector 200A and the second projector 200B in one of the stacking guide image 50, the first instruction image 511, and the second instruction image 531 projected on the projection surface 10. The IP address corresponds to an example of a communication address.

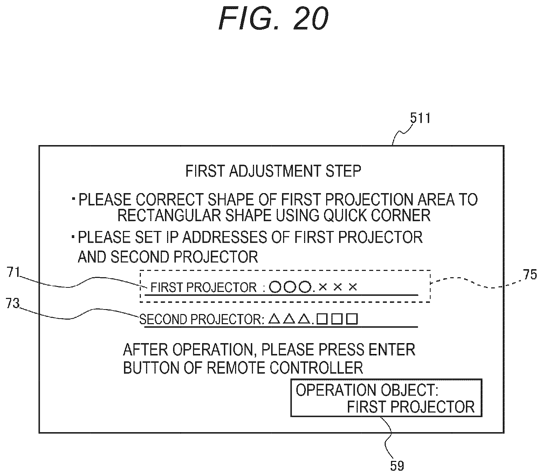

FIG. 20 shows another example of the first instruction image 511.

FIG. 20 shows an example in which a first input field 71, a second input field 73, and an operation frame 75 are displayed in the first instruction image 511. The first input field 71 is a field for inputting the IP address of the first projector 200A. The second input field 73 is a field for inputting the IP address of the second projector 200B.

When the first instruction image 511 is displayed on the projection surface 10, the user first operates the remote controller 5 to move the operation frame 75 to the first input field 71 or the second input field 73. Here, it is assumed that the first input field 71 is selected.

Then, the user presses the enter button provided on the remote controller 5 and inputs the IP address of the first projector 200A to the first input field 71 by operating the remote controller 5. The second controller 270A displays the number of the IP address received by the operation of the remote controller 5 in the first input field 71. When the input of the IP address to the first input field 71 is finished, the user presses the enter button of the remote controller 5.

When the operation of the enter button is received, the second controller 270A changes the display position of the operation frame 75 from the first input field 71 to the second input field 73. When the user presses the enter button of the remote controller 5 and the display position of the operation frame 75 is changed from the first input field 71 to the second input field 73, the user inputs the IP address of the second projector 200B to the second input field 73. The second controller 270A displays the number of the IP address received by the operation of the remote controller 5 in the second input field 73. When the input of the IP address to the second input field 73 is finished, the user presses the enter button of the remote controller 5.

When the enter button of the remote controller 5 is pressed, the second controller 270A determines that the first adjustment step ends, and changes the display of the projection surface 10 from the first instruction image 511 to the stacking guide image 50.

Only the first input field 71 may be displayed in the first instruction image 511, and only the second input field 73 may be displayed in the second instruction image 531. That is, the arrangement of the first input field 71 and the second input field 73 in the stacking guide image 50 can be appropriately changed. The modification example is also applicable to the tiling guide image 60.

### 6. Modification Example 2

In the above described embodiment, the case where the first projector 200A and the second projector 200B are coupled by wire is described, however, the coupling between the first projector 200A and the second projector 200B may be wireless.

For example, it is assumed that the second communication I/F 210A is an interface for wireless communication.

When detecting coupling of a USB type communication device, that is, a so-called USB dongle in the second communication I/F 210A, the second controller 270A may display the selection image 40 on the projection surface 10.

When the first projector 200A and the second projector 200B make wireless communication using Bluetooth, the second controller 270A may display the selection image 40 on the projection surface 10 at paring with the second projector 200B. Bluetooth is a registered trademark.

### 7. Modification Example 3

In the above described embodiment, the first projector 200A or the second projector 200B projects the selection image 40, however, the selection image 40 is not necessarily projected. For example, when the user knows that the first projector 200A and the second projector 200B are used in either the tiling projection or the stacking projection in advance, projection of the selection image 40 is not necessary. In this case, in FIG. 18, steps S2 to S7 may be omitted.

### 8. Modification Example 4

In the above described embodiment, various settings are made on the first projector 200A and the second projector 200B mainly by the operation of the remote controller 5, however, various settings may be made on the first projector 200A and the second projector 200B by an operation of the information processing device 100.

### 9. Modification Example 5

In the above described embodiment, the stacking guide image 50, the first instruction image 511, the second instruction image 531, and the like are sequentially displayed on the projection surface 10, however, at least two of the images may be simultaneously displayed on the projection surface 10. For example, the stacking guide image 50 and the first instruction image 511 may be simultaneously displayed on the projection surface 10, and the state of the first instruction image 511 may be set to be inactive until the first adjustment step 51 is selected by the user. In order to indicate that the state of the instruction image 511 is inactive, the color of the instruction image 511 may be a color such as gray different from the normal color. The same applies to the tiling guide image 60, the first instruction image 611, the second instruction image 631, and the like.

### 10. Modification Example 6

In the above described embodiment, the selection image 40, the stacking guide image 50, and the tiling guide image 60 are sequentially projected, however, at least two of the images may be simultaneously projected. When the selection image 40, the stacking guide image 50, and the tiling guide image 60 are simultaneously projected, both the stacking guide image 50 and the tiling guide image 60 may be kept inactive until one of the radio buttons 41 and the radio button 43 is selected in the selection image 40. For example, when the radio button 41 is selected in the selection image 40, only the stacking guide image 50 may be changed to be active. When the selection image 40 is not projected as in Modification Example 3, only the stacking guide image 50 and the tiling guide image 60 may be simultaneously projected. In this case, the stacking guide image 50 and the tiling guide image 60 themselves may function as a user interface image for designation of either the stacking mode or the tiling mode.

The above described embodiments are preferred embodiments of the present disclosure. However, the present disclosure is not limited to the above described embodiment, and various modifications can be made without departing from the gist of the present disclosure.

For example, the functional units of the first projector 200A shown in FIG. 3 show functional configurations, and specific implementation forms are not particularly limited. That is, hardware individually corresponding to each of the functional units is not necessarily implemented. Obviously, one processor may execute a program to implement functions of a plurality of functional units. Further, part of the functions implemented by software in the above described embodiments may be implemented by hardware, and part of the functions implemented by hardware may be implemented by software. In addition, the specific detailed configurations of the other sections of the first projector 200A and the second projector 200B can be optionally changed without departing from the spirit of the present disclosure.

The units of the processing in the flowcharts shown in FIGS. 18 and 19 are divisions according to the main details for facilitation of understanding of the processing of the first projector 200A. The present disclosure is not limited by a way of division and names of the units of the processing shown in the flowcharts in FIGS. 18 and 19. Further, the processing of the first projector 200A may be divided into more units of the processing according to the details, or may be divided such that one unit includes more details of the processing. Furthermore, the order of the processing in the above described flowcharts is not limited to that in the illustrated example.

In the above described embodiments, the configuration in which the first projector 200A operates as a master machine and the second controller 270A of the first projector 200A transmits the instruction based on the operation signal received from the remote controller 5 to the second projector 200B is described. As another operation, the second projector 200B may be operated as a master machine.

In the above described embodiments, the liquid crystal panel 245 of the light modulation device 243A may be a transmissive-type liquid crystal panel or may be a reflective-type liquid crystal panel. The light modulation device 243A may include a digital mirror device, or may include a combination of a digital mirror device and a color wheel. The light modulation device 243A may employ a configuration that can modulate the light emitted by the light source other than the liquid crystal panel and the DMD.

Further, when the projection method is realized using the computers provided in the projector 200, the programs executed by these computers can be configured in the form of a storage medium. Alternatively, the programs to be executed by these computers can be configured in the form of a transmission medium for transmitting the programs. As the storage medium, a magnetic or optical storage medium or a semiconductor memory device can be used. Specific examples of the storage medium include portable or immobile storage media such as a flexible disc, an HDD (Hard Disk Drive), a CD-ROM, a DVD (Digital Versatile Disc), a Blu-ray disc, a magneto-optical disk, a flash memory, and a card-type storage medium. The storage medium may be a nonvolatile storage device such as a RAM, a ROM, or an HDD as an internal storage device provided in a server apparatus. Blu-ray is a registered trademark.

### 11. Summary of Present Disclosure

A summary of the present disclosure is appended below.

### Appendix 1

A projection method for a projector that projects a projection image at least partially overlapping another projection image projected by another projector, includes determining whether the projector is communicably coupled to the other projector by one or more processors provided in the projector, and projecting a guide image for guiding an operation of at least partially superimposing the projection image and the other projection image by the projector when the projector is communicably coupled to the other projector.

Thereby, when the projector is communicably coupled to the other projector, the guide image for guiding the operation of at least partially superimposing the projection image and the other projection image is displayed. Since the guide image is displayed when the projector is communicably coupled to the other projector, the effort to display the guide image can be saved, compared to a case where the guide image is displayed by operating the menu manually. Further, a user can perform the operation of at least partially superimposing the projection image and the other projection image while visually recognizing the display of the guide image. Therefore, the convenience of the user can be increased.

### Appendix 2

In the projection method according to Appendix 1, the guide image includes a first guide image for the user to select one of a stacking image in which the projection image and the other projection image overlap each other and a tiling image in which a part of the projection image overlaps the other projection image, a second guide image showing a method of adjusting the stacking image, and a third guide image showing a method of adjusting the tiling image, and the projection method further includes projecting the first guide image by the projector, receiving a selection operation of selecting the stacking image or the tiling image by the projector, projecting the second guide image by the projector when the stacking image is selected by the selection operation, and projecting the third guide image by the projector when the tiling image is selected by the selection operation.

Thereby, when the stacking image is selected by the first guide image, the second guide image showing the method of adjusting the stacking image is displayed, and when the tiling image is selected by the first guide image, the third guide image showing the method of adjusting the tiling image is displayed. Accordingly, the user can easily perform an operation of displaying the stacking image and the tiling image while visually recognizing the guide image. Therefore, the convenience of the user can be increased. Note that the guide image including the first guide image, the second guide image, and the third guide image refers to any one of a mode in which all of the guide images are simultaneously projected by the projector, a mode in which at least two of the guide images are simultaneously projected by the projector, and a mode in which the guide images are sequentially projected by the projector.

### Appendix 3

In the projection method according to Appendix 2, the first guide image includes a first option image for selection of the stacking image and a second option image for selection of the tiling image, and the receiving the selection operation includes receiving an operation of selecting the first option image or the second option image by the projector.

Thereby, the first guide image in which the first option image and the second option image are displayed can be displayed. By selecting the first option image or the second option image, the user can select whether to cause the projector and the other projector to display the stacking image or the tiling image. Therefore, the convenience of the user can be increased.

### Appendix 4

In the projection method according to Appendix 2 or 3, the second guide image includes a first instruction image of an instruction on a method of adjusting at least one of a position and a shape of the projection image and a second instruction image of an instruction on a method of adjusting at least one of a position and a shape of the other projection image, and the third guide image includes a third instruction image of an instruction on a method of adjusting at least one of the position and the shape of the projection image and a fourth instruction image of an instruction on a method of adjusting at least one of the position and the shape of the other projection image.

Thereby, when the stacking image is selected, the second guide image displaying at least the method of adjusting at least one of the position and the shape of the projection image and at least the method of adjusting at least one of the position and the shape of the other projection image is displayed. Further, when the tiling image is selected, the third guide image displaying at least the method of adjusting at least one of the position and the shape of the projection image and at least the method of adjusting at least one of the position and the shape of the other projection image is displayed. Accordingly, the user can adjust at least ones of the positions and the shapes of the projection image and the other projection image while visually recognizing the second guide image. Similarly, the user can adjust at least ones of the positions and the shapes of the projection image and the other projection image while visually recognizing the third guide image. Therefore, the convenience of the user can be increased.

### Appendix 5

In the projection method according to Appendix 4, the projector and the other projector operate based on an operation signal transmitted from an operation device provided separately from the projector and the other projector, an identification image indicating that an object of an operation by the operation device is the projector is projected by the projector in the first instruction image and the third instruction image, and the identification image indicating that the object of the operation by the operation device is the other projector is projected by the projector in the second instruction image and the fourth instruction image.

Thereby, the identification image indicating that the object of the operation by the operation device is the projector is projected by the projector in the first instruction image and the third instruction image. Further, the identification image indicating that the object of the operation by the operation device is the other projector is projected by the projector in the second instruction image and the fourth instruction image. Accordingly, when the projector or the other projector is operated by the operation device, the user can recognize whether the operation object of the operation device is the projector or the other projector. Therefore, the convenience of the user can be increased.

### Appendix 6

In the projection method according to Appendix 2, 3, 4 or 5, the second guide image and the third guide image include display for requesting input of communication addresses of the projector and the other projector, and the communication addresses are displayed in the second guide image and the third guide image by the projector according to an operation received by the projector.

Thereby, the display for requesting input of the communication addresses of the projector and the other projector is displayed in the second guide image and the third guide image, and the communication addresses are displayed in the second guide image and the third guide image according to the operation received by the projector. Accordingly, it is not necessary to perform an operation of separately displaying a screen for setting the communication addresses of the projector and the other projector. Therefore, the effort of the operation of the user can be reduced and the convenience of the user can be increased.

### Appendix 7

A projector that projects a projection image at least partially overlapping another projection image projected by another projector, includes a communication interface that communicates with the other projector, a projection section that projects the projection image, and one or more processors that determine whether the projector is communicably coupled to the other projector, wherein the one or more processors determine whether the projector is communicably coupled to the other projector, and projects a guide image for guiding an operation of at least partially superimposing the projection image and the other projection image by the projection section when the projector is communicably coupled to the other projector.

According to the configuration, when the projector is communicably coupled to the other projector, the guide image for guiding the operation of at least partially superimposing the projection image and the other projection image is displayed. Since the guide image is displayed when the projector is communicably coupled to the other projector, the effort to display the guide image can be saved, compared to the case where the guide image is displayed by operating the menu manually. Further, the user can perform the operation of at least partially superimposing the projection image and the other projection image while visually recognizing the display of the guide image. Therefore, the convenience of the user can be increased.

### Appendix 8

A non-transitory computer-readable storage medium storing a program to be executed by one or more processors mounted on a projector that projects a projection image at least partially overlapping another projection image projected by another projector, the program causes the one or more processors to execute determining whether the projector is communicably coupled to the other projector, and projecting a guide image for guiding an operation of at least partially superimposing the projection image and the other projection image by the projector when the projector is communicably coupled to the other projector.

According to the configuration, when the projector is communicably coupled to the other projector, the guide image for guiding the operation of at least partially superimposing the projection image and the other projection image is displayed. Since the guide image is displayed when the projector is communicably coupled to the other projector, the effort to display the guide image can be saved, compared to the case where the guide image is displayed by operating the menu manually. Further, the user can perform the operation of at least partially superimposing the projection image and the other projection image while visually recognizing the display of the guide image. Therefore, the convenience of the user can be increased.

## Claims

1. A projection method for a projector that projects a projection image at least partially overlapping another projection image projected by another projector, the projection method comprising:
determining whether the projector is communicably coupled to the other projector by one or more processors provided in the projector; and
projecting a guide image for guiding an operation of at least partially superimposing the projection image and the other projection image by the projector when the projector is communicably coupled to the other projector.

2. The projection method according to claim 1, wherein
the guide image includes a first guide image for a user to select one of a stacking image in which the projection image and the other projection image overlap each other and a tiling image in which a part of the projection image overlaps the other projection image, a second guide image showing a method of adjusting the stacking image, and a third guide image showing a method of adjusting the tiling image,
the projection method further comprising:
projecting the first guide image by the projector;
receiving a selection operation of selecting the stacking image or the tiling image by the projector;
projecting the second guide image by the projector when the stacking image is selected by the selection operation; and
projecting the third guide image by the projector when the tiling image is selected by the selection operation.

3. The projection method according to claim 2, wherein
the first guide image includes a first option image for selection of the stacking image and a second option image for selection of the tiling image, and
the receiving the selection operation includes receiving an operation of selecting the first option image or the second option image by the projector.

4. The projection method according to claim 2 or 3, wherein
the second guide image includes a first instruction image of an instruction on a method of adjusting at least one of a position and a shape of the projection image and a second instruction image of an instruction on a method of adjusting at least one of a position and a shape of the other projection image, and
the third guide image includes a third instruction image of an instruction on a method of adjusting at least one of the position and the shape of the projection image and a fourth instruction image of an instruction on a method of adjusting at least one of the position and the shape of the other projection image.

5. The projection method according to claim 4, wherein
the projector and the other projector operate based on an operation signal transmitted from an operation device provided separately from the projector and the other projector,
an identification image indicating that an object of an operation by the operation device is the projector is projected by the projector in the first instruction image and the third instruction image, and
the identification image indicating that the object of the operation by the operation device is the other projector is projected by the projector in the second instruction image and the fourth instruction image.

6. The projection method according to any one of claims 2 to 5, wherein
the second guide image and the third guide image include display for requesting input of communication addresses of the projector and the other projector, and
the communication addresses are displayed in the second guide image and the third guide image by the projector according to an operation received by the projector.

7. A projector that projects a projection image at least partially overlapping another projection image projected by another projector, the projector comprising:
a communication interface that communicates with the other projector;
a projection section that projects the projection image; and
one or more processors that determine whether the projector is communicably coupled to the other projector, wherein
the one or more processors determine whether the projector is communicably coupled to the other projector, and projects a guide image for guiding an operation of at least partially superimposing the projection image and the other projection image by the projection section when the projector is communicably coupled to the other projector.

8. A non-transitory computer-readable storage medium storing a program to be executed by one or more processors mounted on a projector that projects a projection image at least partially overlapping another projection image projected by another projector, the program causing the one or more processors to execute:
determining whether the projector is communicably coupled to the other projector; and
projecting a guide image for guiding an operation of at least partially superimposing the projection image and the other projection image by the projector when the projector is communicably coupled to the other projector.
